# EUROPÄISCHE PATENTANMELDUNG

(11) **EP 1 614 736 A2**
(43) Veröffentlichungstag der Anmeldung: **11.01.2006**
(21) Anmeldenummer: 05014944.2
(22) Anmeldetag: 11.07.2005
(51) Int. Cl.: C09K 5/06, A41F 7/00, A41F 17/00

(54) **Wärmeregulierender Materialverbund und seine Verwendung**

(30) Priorität: 10.07.2004 DE 102004033431
(71) Anmelder: Interstuhl Büromöbel GmbH & Co. KG, 72469 Messstetten (DE)
(72) Erfinder: Schempp, Richard, 72469 Messstetten (DE)
(74) Vertreter: Kohler Schmid Möbus

(57) **Zusammenfassung**

Die Erfindung betrifft einerseits einen wärmeregulierenden Materialverbund für Formkörper, Verkleidungen oder Beschichtungen, welcher eine Materialzusammensetzung aus einem Polyol, einem Isocyanat und einem Paraffin umfasst, und andererseits die Verwendung des Materialverbunds für die Möbel- und Automobilindustrie sowie für medizinische Bereiche wie Matrazen, Liegen, Rollstühle, Binden etc.

## Beschreibung

Die Erfindung betrifft einen wärmeregulierenden Materialverbund und seine Verwendung.

Mithilfe des Materialverbunds kann ein kompletter Formkörper, eine Verkleidung eines Gegenstands oder eine Folie ausgebildet werden. Der Materialverbund kann auch nur ein Teil des Formkörpers, der Verkleidung oder der Folie und in diese Elemente integriert sein.

Wärmeregulierend bedeutet, dass ein Wärmeaustausch oder Temperaturausgleich des Materialverbunds mit der Umgebung stattfindet. Ist die Temperatur des umgebenden Materials gegenüber dem Materialverbund höher, entzieht der Materialverbund dem umgebenden Material Wärme und speichert diese. Ist die Umgebungstemperatur gegenüber dem Materialverbund niedriger, gibt der Materialverbund Wärme an die Umgebung ab.

Diese bekannte Art der Wärmeregulierung kann beispielsweise mithilfe eines Phase-Change-Materials (PCM) erreicht werden, welches in der WO 94/02257 beschrieben ist. Dieses Material kann in Fasern, in Gewebe oder in Schaum eingebettet werden. In einen Trägermantel eingebettete PCMs, z. B. in winzige Mikrokapseln eingeschlossene PCMs, wie Paraffine, können Wärme oder Energie aufnehmen oder speichern und wieder abgeben.

Die technische Handhabung dieser Materialien bereitet allerdings Schwierigkeiten. Die in der WO 94/02257 beschriebene Anwendung bezieht sich auf Bekleidungsstücke. Ein Schwitzen und Auskühlen des Körpers soll vermieden werden.

Bekannt sind auch Schäume, welche Wasser aufnehmen können, und in Aluminium eingebettete Granulate, welche für Raumverkleidungen genutzt werden.

Der Anmelder hat sich die Aufgabe gestellt, einen wärmeregulierenden Materialverbund zu entwickeln, welcher aufgrund seiner technischen Handhabbarkeit in vielen industriellen Bereichen, beispielsweise in der Möbelindustrie oder in der Automobilindustrie, einsetzbar ist.

Diese Aufgabe wird erfindungsgemäß durch einen wärmeregulierenden Materialverbund für Formkörper, Verkleidungen oder Beschichtungen gelöst, welcher eine Materialzusammensetzung aus einem Polyol, einem Isocyanat und einem Paraffin umfasst. Polyole sind chemische Verbindungen, die mehrere Hydroxylgruppen (OH-Gruppen) enthalten, und einen Reaktionspartner für das Isocyanat bei der Polyaddition von Polyurethanen bilden. Isocyanate sind Salze und Ester der Isocyansäure (HNCO). Polyurethane sind Polyester und werden durch Polyaddition von Isocyanaten und Alkoholen hergestellt. Sie sind ein vielfältig verwendbarer Duroplast und können zu großflächigen Gehäuseteilen und zu widerstandsfähigen Maschinenelementen verarbeitet werden. Erfindungsgemäß kann der Materialverbund in einen Formkörper, in eine Beschichtung oder in eine Folie eingebettet werden. Die Kombination von Polyol, Isocyanat und Paraffin führt zu einem wärmeregulierenden Stoff, welcher mit weiteren Materialien kombiniert werden kann.

Das Paraffin wirkt bekannterweiser als Keimbildner für ein salzbasiertes Latentspeichermaterial und bindet die Salze in eine homogene wachsartige, pastöse Masse ein.

Erfindungswesentlich auch in Alleinstellung ist in diesem Zusammenhang, dass das Paraffin mit dem salzbasierten Latentspeichermaterial auf ca. T = 40 °C erwärmt wird und in einem aufgeweichten oder verflüssigten Zustand mit dem Polyol vermischt wird. Wird diese Produktmischung mit Isocyanat einer chemischen Reaktion ausgesetzt, so entsteht ein Material, das den erfindungsgemäßen Materialverbund bildet.

Die Mischung aus Paraffin mit dem salzbasierten Latentwärmespeicher und dem Polyol ist so gewählt, dass der erfindungsgemäße Materialverbund in einer ganz bevorzugten Ausführungsform eine Sitz- und/oder Liegefläche eines Stuhls oder einer Liege auf einer über die Fläche gleichmäßig verteilten Temperatur hält, wenn Körperwärme einer Person an die erfindungsgemäß ausgestaltete Sitz- und/oder Liegefläche abgegeben wird. Die Temperaturen der Sitz- und/oder Liegeflächen stellen sich selbstregulierend so ein, dass das Schwitzen einer Person, die auf einem derart ausgebildeten Stuhl oder einer derart ausgebildeten Liege sitzt bzw. liegt, unterbunden wird. Je nach Materialverbundausbildung können in Benutzung dieser Stühle oder Liegen Flächentemperaturen zwischen T = 28 °C und T = 34 °C eingestellt werden.

Soll ein Schaum mit den erfindungswesentlichen Eigenschaften des Materialverbunds hergestellt werden, so wird dafür geeignetes Polyol, mit beispielsweise Zellbildnern, im Mengenverhältnis 2:1 mit Isocyanat in Reaktion gebracht. Ein Mengenanteil Isocyanat wird mit zwei Mengenanteilen Polyol einer chemischen Reaktion ausgesetzt. Dem Polyol wurden in einem vorangegangenen Verfahrensschritt 10 % bis 50 % Paraffin mit dem salzbasierten Latentspeichermaterial zugemischt, sodass nach abgeschlossener chemischer Reaktion ein Gesamtschaummaterial vorliegt, das alle wärmeregulierenden Vorteile des eingebundenen Paraffinwärmespeichers aufweist.

Der Materialverbund kann erfindungsgemäß auch in eine Folie eingearbeitet sein oder als Flüssigkeit vorliegen, mit der gewünschte Flächen beschichtet werden.

Mit unterschiedlichen salzbasierten Latentspeichermaterialien und mit unterschiedlichen Gewichtsanteilen Paraffin, sowie mit Paraffinen unterschiedlichster Eigenschaften lassen sich erfindungsgemäße Materialverbundsysteme herstellen, die ihre wärmeregulierenden Eigenschaften in unterschiedlichsten Temperaturbereichen entfalten. Unterschiedliche Materialverbundstärken und temperaturabhängige Konsistenzen des erfindungsgemäßen Materialverbunds ermöglichen die Abstimmung auf unterschiedlichste Anwendungen.

Der erfindungsgemäße Materialverbund kann zu einem Formkörper, einer Beschichtung oder Verkleidung und zu einer Folie verarbeitet werden. Als Formkörper kann der Materialverbund zu einem starren Teil jedes denkbaren Gegenstands wie Gehäusen, Karosserien und Trägern verwendet werden. Als nicht selbstständig starres Element kann der Materialverbund starre Elemente überziehen oder verkleiden. Daraus ergibt sich, dass der Materialverbund in unterschiedlicher Stärke eingesetzt werden kann. Aus der Materialstärke resultiert das Ausmaß des erwünschten bzw. geforderten wärmeregulierenden Effekts. Je größer der Anteil des verarbeiteten Materialverbunds an dem Gesamtkörper ist, desto größer ist die Wärmeregulation. Es können größere Wärmemengen gespeichert oder abgegeben werden. Die Wärmeregulation ist abhängig von dem Einsatz definierter Paraffine und der unterschiedlichen Ausgangstemperatur.

Vorteilhafterweise kann der Materialverbund bei der Herstellung von Sitz- oder Liegemöbeln genutzt werden. Als Ersatz für den herkömmlichen Sitzträger oder Lattenrost kann eine feste Formplatte aus dem Materialverbund in Betracht kommen. Dies gilt ebenso für die Rückenlehne. In beiden Fällen wird das Sitzklima verbessert, indem der Sitz oder die Rückenlehne dem Sitzenden oder Liegenden Wärme entzieht oder an diesen abgibt. Feuchtigkeitsbildung oder Schweißbildung im Bereich der Sitz- oder Liegefläche wird gegenüber herkömmlichen Sitzen oder Liegen reduziert bzw. verhindert.

Bevorzugt ist auch die Verwendung des Materialverbunds bei Polstern. Dies kann durch das Einlegen als Puffer geschehen. Geeignete Polsterfüllungen oder ähnliche Materialien können in das erfindungsgemäße Material getränkt werden. Polster können so in der gleichen Fertigungszeit mit wärmeregulierenden, das Sitz- oder Liegeklima verbessernden Eigenschaften hergestellt werden, in dem Folien entsprechender Stärken in das Polster eingearbeitet werden.

Der Materialverbund kann auch als Überzug des Polyurethans dienen, d. h. als Gießhaut im Bereich von Arbeits- oder Reinraumstühlen als Ersatz für herkömmlichen Integralschaum und Kunstleder.

Auch als offenzellige Polyurethanhaut oder geschlossenzelliger Schaumstoff ist der Materialverbund denkbar, z. B. als Ersatz für eine Flammkaschierung, indem ein Sandwichverbund hergestellt wird oder der Stoff als Verklebung mit Gießharz verbunden wird.

Hinterschäumte Polster können mit Wärmespeicher ausgerüstet werden. Das bisherige nachteilige Schwitzverhalten tritt nicht mehr auf.

Weiterhin ist die Verwendung der Erfindung bei Polyurethanen mit hoher Dichte möglich. Der Wärmespeicher könnte in die Trägerteile beispielsweise von Möbeln mit integriert werden, beispielsweise als sehr dünnes Polster.

Bevorzugt ist auch die Verwendung im Automobilbereich als Verkleidung, beispielsweise als Dachhimmelverkleidung, zur Verbesserung des Raumklimas und Unterstützung der Klimaanlage im Kraftfahrzeug. Erfindungsgemäße Dachhimmelverkleidungen können dem Fahrzeuginnenraum je nach Fahrzeuginnentemperatur Wärme entziehen und speichern und an den Fahrzeuginnenraum wieder abgeben.

## Patentansprüche

1. Wärmeregulierender Materialverbund für Formkörper, Verkleidungen oder Beschichtungen, umfassend eine Materialzusammensetzung aus einem Polyol, einem Isocyanat und einem Paraffin.

2. Formplatte aus dem Materialverbund nach Anspruch 1.

3. Folie aus dem Materialverbund nach Anspruch 1.

4. Gewebe aus dem Materialverbund nach Anspruch 1.

5. Verwendung des Materialverbunds nach Anspruch 1 für Sitzmöbel.

6. Verwendung nach Anspruch 5, **dadurch gekennzeichnet, dass** der Sitzträger aus einer Formplatte aus dem Materialverbund besteht.

7. Verwendung nach Anspruch 5, **dadurch gekennzeichnet, dass** die Rückenlehne aus einer Formplatte aus dem Materialverbund besteht.

8. Verwendung des Materialverbunds nach Anspruch 1 für die Verkleidung von Automobilinnenräumen.

9. Verwendung des Materialverbunds nach Anspruch 1 für Polster und Kissen.
